# EUROPEAN PATENT APPLICATION

(11) **EP 3 751 492 A1**
(43) Date of publication of application: **16.12.2020**
(21) Application number: 19179791.9
(22) Date of filing: 12.06.2019
(51) Int. Cl.: G06Q 30/02

(54) **METHOD FOR PERSONALIZATION OF DIGITAL INFORMATION**

(71) Applicant: Addrelevance, 3800 Sint-Truiden (BE)
(72) Inventor: Coopmans, Peter, 3800 Sint-Truiden (BE)
(74) Representative: Calysta NV

(57) **Abstract**

The invention relates to a system and a method for personalization of digital information, wherein the actions of a visitor of a digital medium are monitored by an analytics script in order to provide a personalized version of said digital information.

## Description

### Technical Domain

The present invention relates to a method for personalizing digital information and more specifically to analyze the actions of a visitor of digital media and presenting the type of information that matches with the actions of the visitor.

### Technological Background of the invention

A variety of methods exist for selecting the appropriate digital information for a given visitor on a digital media, this selection being often based on keywords which have been typed often by said visitor. Advertisers for example provide their digital information containing advertisements to an advertising network and specify which keywords or type of sites match their advertisement. These specified keywords will then be compared with the most used keywords by said visitor and cause the appropriate advertisement to be displayed. These advertisements or digital information often results in very low click through ratio's (CTR) and Conversion rates (CR) therefor resulting in a low return on investment (ROI) for the person or company paying for the advertisement, generating a low revenue for the publisher of the advertisement, as they often receive a revenue based on the CTR or CR. The visitor of the digital platform - displaying the digital information or advertisement - at his/her end, will receive digital information presented in a non-interesting way for him/her which leads to him/her being annoyed when consulting the digital media.

### Prior art

Methods similar to the method mentioned in the beginning are well known in the art. For example US7062510B1 describes a method for selecting a specific advertisement for a visitor based on the purchase history of the visitor. The system will load all the previous purchases in memory and will determine a purchase vector. This vector represents the product preferences for said visitor and is used to determine a selection of products from the catalog of the merchant. The selection of products from the catalog of the merchant will be presented as digital information to the visitor. Unfortunately, this method already requires some purchases being made on the digital platform of the merchant, in order to have a determination of a set of products to be displayed.

The method according to KR20180121466 presents a personalized product recommendation method. This method makes use of behavior monitoring and a product catalog to select the product that matches best with the behavior of the visitor. According to this document, machine learning can be used to further improve the prediction of the product matching the behavior of the visitor. This method however represents the drawback of showing a general representation of the advertisement, often not triggering the visitor to click on the advertisement and place an order.

The known methods generally still result in a suboptimal ROI generated by the advertisement contained in the digital information due to a low click-through ratio, mainly because the pushed advertises are just substitutes of the advertises consulted and searched by the visitor.

There is therefore a general need to increase the CTR (Click-Through-Ratio) and/or the CR of said digital information. Such an increase of the CTR will also increase the revenue coming from digital information made available by publishers, and decrease the overload of non-relevant digital information for the end-users.

### Summary of the invention

It is foreseen according to the present invention, a method as mentioned in the beginning, for providing personalized digital information to a digital media, according to the actions of a user on said digital media, further characterized in
i) Defining a series of profiles n₁, ..., nₙ. These profiles are carefully chosen to categorize visitors of the digital medium in different groups, according to their buying behavior for example. This categorization.
ii) Requesting building blocks for digital information related to one or more products or services in a digital information database of a publisher of digital information management system or content management system (CMS), to build digital information adapted to each n^{th} profile in said series of profiles provided to be displayed on said digital media
iii) Attributing by a machine learning engine comprising at least a processor and a computer readable medium, one specific profile from said series of profiles n1, ..., nₙ to a user consulting said digital media by analyzing key parameters for said specific user stored in an analytics database describing the behavior of users on the digital media and writing said attributed profile to a cookie of said user on a computer readable medium
iv) Sending a signal by said processor comprising an identifier of the attributed profile stored in said cookie on said computer readable medium to said digital information management system
v) Selecting and downloading based on said signal at least one building block for personalized content and/or presentation of digital information and collecting the corresponding content and layout corresponding to said attributed profile from said digital information database comprised in said digital information management system
vi) Presenting said digital information by combining the personalized content and layout and displaying it on said digital media.

Monitoring the user behavior of said user on said digital media by collecting values corresponding to one of said key parameters contained in said series of key parameters and sending signals comprising a value for each indicator in said series of key indicators for said specific user to said analytics database storing parameters describing the behavior of users on said digital media. It has been indeed realized according to the present invention that it is possible through tracking a set of key parameters ((i.e. scrolling, time spend on a page, type of content consumed on the digital platform,...), describing the actions of a visitor on a digital media and making a prediction based on the analysis of said key parameters in real-time by a machine learning engine to match an end-user with one of the profiles defined in a series of profiles characterizing the end-users, to solve at least a part of the aforesaid drawbacks by providing a system in which the digital information is adapted and more relevant to the visitor of the digital media and will increase the CTR (Click-through-Ratio) for the digital information.

In a preferred embodiment according to the present invention, said attribution of said nₜₕ profile to said specific user by said machine learning engine of step iii is performed by using decision tree learning as predictive model. This machine learning model is able to follow the same approach as a human being, although being able to make the predictions instantly, adds a success change (in %) to each and every prediction and is able to handle a big set of data to be analyzed. Additionally, said decision tree learning already shows a decent accuracy rate when the data available in said analytics database is rather low.

In a more preferred embodiment according to the present invention, the machine learning engine makes use of a deep learning neural network to predict the probability of each profile in said series of profiles for said specific visitor by analyzing the values corresponding to the key parameters stored in said analytics database storing parameters describing the behavior of users on said digital media. This deep learning neural network can reach an even higher accuracy rates compared to the machine learning using the decision tree model, when provided with a large amount of data. A higher accuracy rate means a higher chance on attributing the right profile and therefor a higher CTR.

Preferably, the machine learning engine being a deep learning neural network is pretrained by analyzing values corresponding to key parameters copied from an already populated analytics database of the publisher to said analytics database monitoring the user-behavior on said digital media matched with one of the profiles selected from said series of profiles. This pretraining will make sure that the machine learning engine will already provide a higher prediction accuracy from the start, and thus a higher CTR.

More advantageously, the machine learning engine being a trained deep learning neural network will further train itself based on data collected in said analytics database storing key parameters describing the behavior of users on said digital media, after and implementation of the system. This will further increase the accuracy of the profile prediction after the system has been put in place. As the machine learning engine is able to learn out of the success achieved by previous predictions by analyzing the profile that was predicted to the set of parameters and if it resulted in an action or not.

The present invention further relates to a system for personalizing digital information to be displayed on a digital media comprising:
i) A digital information database managed by the publisher of said digital information, comprising a series of building blocks for said digital information, each building block in the series of building blocks matching to at least one profile in a series of predefined profiles n₁, ... nₙ, said digital information management system sending the appropriate building block corresponding to a predefined profile in a list of predefined profiles, upon receiving a signal comprising an identifier of said predefined profile.
ii) An analytics database, comprising at least one processor and a computer readable medium, said analytics database storing values corresponding to key parameters defined in a series of key parameters p₁,p₂,...,p_{z} such as scrolling behavior, navigation behavior, CTR, CR, .... Said analytics database being further provided to store said set of key parameters describing the behavior of visitors of said digital medium.
iii) A machine learning engine, comprising at least one processor and a computer readable medium, said machine learning engine matching said key parameters stored in said analytics database with a nₜₕ profile in said predefined series of profiles n₁,n₂,... n_{n. Said} machine learning engine allowing profile predictions in real-time while still analyzing a large amount of data presented in said analytics database.
iv) An analytics script implemented on said digital media publishing the digital information, said script collecting said values corresponding to said key parameters defined in said series of key parameters, said script sending a signal comprising said values corresponding to said key parameters defined in said series of key parameters to said analytics database, said script receiving a signal comprising a profile prediction made by said machine learning engine for the visitor currently consulting the digital medium, said profile prediction containing an identifier of said predicted profile in the list of predefined profiles n₁, ... nₙ, said analysis script storing said identifier of said matched profile in a cookie or data layer, written on the computer readable medium of said digital media publishing said digital information. Said cookie or said data layer can be read out by a digital information system of the publisher to obtain said matched profile in order to query a digital information database from the publisher for building blocks matching said predicted profile. Said analytics script allowing the monitoring of the actions of a visitor, and uploading a set of key parameters to said analytics database, describing said actions. Said analytics script further being implemented to receive the predicted profile coming from the machine learning engine and to store it on a computer readable medium, so that said digital information database can consult it to provide the right building blocks.

Advantageously, said machine learning engine, connected to said analytics database, is programmed to use a decision tree model. Said decision tree model being provided to predict a probability rate for each nth profile in said series of profiles by analyzing said analytics database comprising key parameters for said visitor of said digital medium. Said decision tree model providing a decent prediction accuracy level when the dataset available in said analytics database is rather limited.

More preferably, said machine learning engine, connected to said analytics database, is a deep learning neural network, said deep learning neural network being provided to predict a probability rate for each nth profile in said series of profiles by analyzing said analytics database comprising key parameters for said visitor of said digital medium. The deep learning neural network providing an even more accurate profile prediction, when there is a sufficient amount of the data available in said analytics database.

Other embodiments according to method according to the present invention are mentioned in the appended claims

### Detailed description of the invention

As already said, the method according to the present invention provides steps for personalizing digital information to be presented to a visitor of a digital media. To provide said personalized information to a unique visitor, a list of profiles needs to be defined under which the visitors of the digital media can be categorized. Building blocks comprising a specific layout or content for each profile will be created in the digital information database of the publisher. These building blocks being provided to create a personalized digital information for a specific n^{th} profile.

The monitoring of a set of key parameters describing the actions of these visitors, will allow the categorization of each visitor under one of the profiles in the list. Advantageously, this approach can be automized by using different machine learning techniques, which can be executed in real-time and thus being applicable to a variety of digital media, for example web advertisements, online customer journeys, ... , as all of these digital media only have a very small timeframe to respond to a demand for digital information,.

To monitor the set of key parameters and customize the digital media, an analytics script has to be implemented on the digital media itself. This script will perform the monitoring of said digital media, the communication with the analytics database of the system through an API, and provide information to the digital information database of the publisher of digital information. When a visitor consults the digital media, the script will receive a profile prediction, which is being pushed from the machine learning, including the most appropriate profile found at that time. This profile prediction is then stored in a cookie on the computer readable medium of the visitor or in the data layer of the digital medium. The digital information system of the publisher will then read said cookie or said data layer to obtain the predicted profile and then query a comprised digital information database for the appropriate building blocks and return these in a response to said digital medium. The digital medium will then use these building blocks to create the appropriate representation of the digital information. Said representation of digital information will then be optimized to have a high click-through-ratio and call to action for the predicted profile of the visitor.

Preferably, said series of parameters contain, but are not limited to the following parameters: the number of pageviews and average time spend on the digital media and its specific pages, the type of content that has been consumed, the scrolling behavior on a page, the number of return visits within 1 week, etc.

The script will further provide a feedback loop between the digital media and the analytics database, meaning that it can further enrich the data captured in the analytics database with the identifier of the predicted profile. This feedback data can then be used further to improve the algorithm of the machine learning engine, increasing the accuracy of the predictions and thus further improve the return on investments for the publisher and the advertiser.

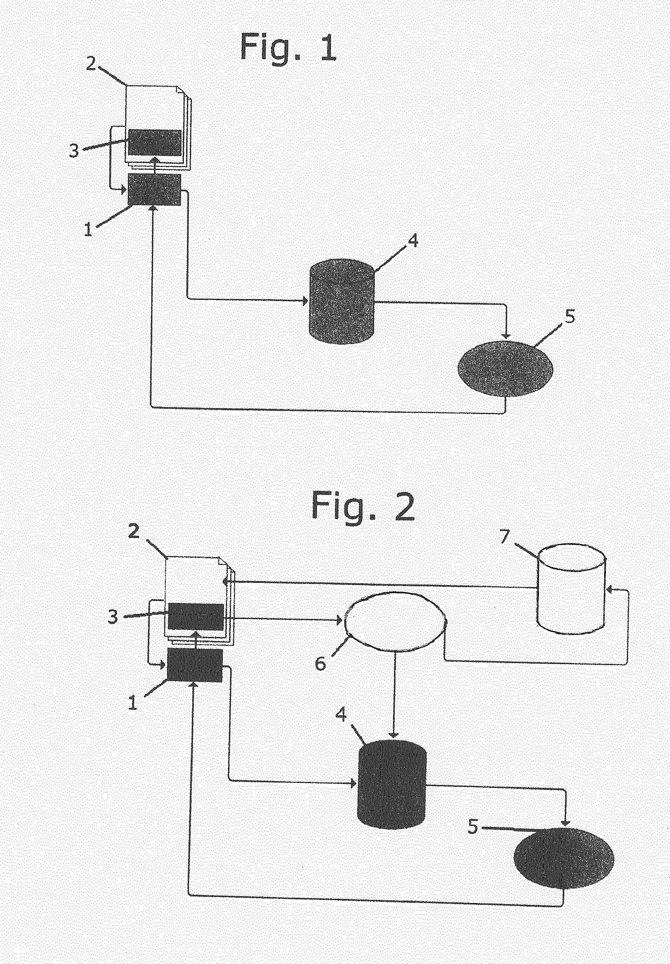

**Figure 1** is a schematic representation of the invention, representing the different elements of the system and the interaction between these elements. The system comprises an analytics script **1** allowing to monitor the actions of a visitor on the digital media **2** of the publisher and to allow interaction with a cookie **3** stored on a computer readable medium of the visitor or the data layer of the digital medium of the publisher. The analytics script itself is written in such a way that it can be easily added/embedded into digital media, being for example a website or web application. Said analytics script further monitoring a set of actions made by said visitor on said digital medium and sending a signal comprising a set of key parameters identifying said actions via an API to an analytics database **4,** said analytics database storing this signal under the form of data. The signal or the data comprise(s) a series of key parameters identifying the actions (scrolling behavior, time spend on a page, content consumed, ...) of visitors on said digital medium of the publisher. Said data stored in said analytics database will be analyzed and processed by artificial intelligence, and more specifically by a machine learning engine **5.** Said machine learning engine will match the data contained in the analytics database to one of the profiles defined in the series of profiles. In order to do this, the machine learning engine can make use of one of many known predictive models. An example of such a predictive model is the decision tree learning model. By using said decision tree learning model, the machine learning engine will predict the chance that each nth profile out of the series of profiles matches to the analyzed data. The nth profile out of the series with the highest predicted chance will be selected as the best matching profile. Said best matching profile will then be encapsulated in a return signal which will be send back to said analytics script.

**Figure 2** is a schematic representation of an implementation of the invention in an already existing digital information system of a publisher: When a visitor consults the information on a digital medium **2,** said machine learning engine **5** will perform a real-time analysis of the key parameter data captured by said analytics script **1,** stored in the analytics database **4** for said visitor, and predict the profile which matches best with the analyzed key parameters of the visitor out of the predefined list of profiles.

Afterwards a signal containing information regarding the predicted profile of the unique user will be pushed back to the analytics script 1. The script will then write data comprising the predicted profile to a cookie on the computer readable medium of the visitor or to the data layer of said digital medium, so the digital information management system or CMS (Content management system) **6** can consult said cookie or said data layer of said digital medium and use it to obtain digital information matching said predicted profile. Said digital information management system or CMS containing different digital information building blocks adapted for each of the profiles available in the defined list of profiles, in order to optimize the efficiency of the digital information according, thus optimizing the relevancy of the information and the ROI for the person paying for this digital information, the revenue of the publisher being payed to show the digital information and the user experience of the visitor.

A system according to the presented solution can be installed for instance at a publisher of digital advertisements concerning objects such as cars on a website as digital medium. The list of profiles can be for example based on the profiles presented by the buying modalities framework. Said buying modalities framework describes 4 different buying modalities identifying the buying behavior of human beings. These 4 profiles would describe:
1. A competitive buyer
2. A spontaneous buyer
3. A methodical buyer
4. A humanistic buyer

The advertisement to be presented can then be split up into different building blocks, one building block contains the picture of the object, such as the picture of the car, a second building block contains for example the CTA button and another building block comprises the subtitle of the advertisement. A version of each building block, adapted to each profile according to the buying modalities framework should then be made available on the content management system of the publisher of the digital advertisement.

For example for a methodical buyer, the subtitle will mention an advanced technological feature and the CTA button will propose to download the brochure to have more technical information. For the humanistic buyer, the CTA button can comprise a message like "order a test drive" and the subtitle comprise a tag line explaining that a dealer is nearby and always at your service.

From the moment a visitor navigates to the website of said publisher, his/her behavior will be tracked by said analytics script, which will start monitoring the key parameters for said visitor and send them through an API to the analytics database of the system.

The system can also optionally be pretrained by feeding pretraining data to the analytics database, coming from an already existing analytics database of the publisher (google analytics, adobe analytics, ...). Said pretraining data containing a set of key parameters and the corresponding profiles.

The system will then start predicting the most relevant profile out of said list of profiles, matching the key parameters collected for a visitor and made available in the analytics database. Said analytics script will then obtain a signal comprising an identifier for said most relevant profile. Said identifier will be stored in a cookie on the computer readable medium of said visitor. When the visitor navigates back on the website of the publisher, the CMS system of said publisher of car advertisements obtains the identifier from said cookie, and select the building blocks for the CTA button and the subtitle matching said most relevant profile. These building blocks will then be assembled to create the advertisement and shown to the visitor of the digital medium, making the advertisement more relevant and attractive for said visitor. The presentation of the car for a visitor matching the humanistic profile for example will show the car, but with a subtitle and a CTA button which is different according to the presentation of the car for a visitor matched with the methodical profile.

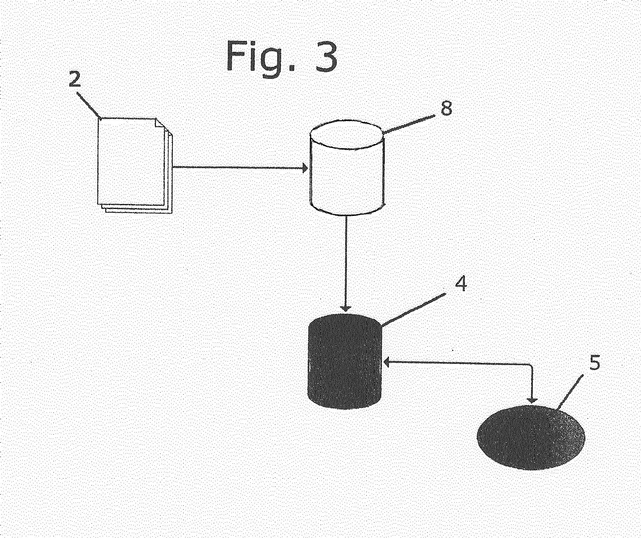

**Figure 3** shows a schematic representation of the pretraining phase of the machine learning engine. The pretraining will be done by analyzing the actions and events which were already monitored by an analytics database **8** of the publisher. Examples of such analytics database are : Google Analytics, Adobe Analytics, .... The information contained in these database will be copied over to the analytics database of the system according to the invention **4** and afterwards analyzed by the machine learning **5.** This Pretraining increases the prediction accuracy of the system during the initial phase.

It should be understood that the present invention is not limited to the described embodiments and that variations can be applied without going outside of the scope of the appended claims.

## Claims

1. A method for personalizing content and/or presentation of digital information on a digital media according to a predicted profile out of a series of profiles comprising:
i) Defining a series of profiles n₁, ..., nₙ
ii) Creating building blocks b₁, b₂, ..., bₓ of digital information related to one or more products or services in a digital information database comprised in a digital information management system of a publisher of digital information, to build digital information adapted to each n^{th} profile in said series of profiles n₁, ..., nₙ provided to be displayed on said digital media
iii) Attributing by a machine learning engine comprising at least a processor and a computer readable medium, one specific profile from said series of profiles n₁, ..., nₙ to a user consulting said digital media, by analyzing a series of key parameters p₁, p₂, ... p_{z} related to said specific user, stored in an analytics database storing said key parameters describing the actions of users on the digital media and writing said attributed profile to a cookie of said user on a computer readable medium or to a computer readable medium of said digital medium
iv) Reading said cookie or said computer readable medium of said digital medium by said digital information management system, to obtain said attributed profile for said user.
v) Querying said digital information database by said digital information management system and downloading, based on said attributed profile obtained from said cookie, at least one b^{th} building block containing digital information adapted to said predicted profile.
vi) Presenting said at least one b^{th} building block containing digital information by combining the personalized content and layout on said digital media.
vii) Monitoring the actions of said user on said digital media by collecting values corresponding to at least one pₜₕ key parameter contained in said series of key parameters and sending a signal comprising a value for said at least pₜₕ key parameter in said series of key parameters for said specific user to said analytics database.

2. The method according to claim 1 wherein said attribution of said nₜₕ profile to said specific user by said machine learning engine of step iii is performed by using decision tree learning as predictive model

3. The method according to claim 1 wherein said machine learning engine makes use of a deep learning neural network predicting the probability of each nₜₕ profile in said series of profiles n₁,n₂, ... nₙ for said specific user by analyzing the values corresponding to said key parameters stored in said analytics database

4. The method according to claim 3 wherein said deep learning neural network is pretrained by analyzing values corresponding to a set of key parameters copied from an already existing analytics database of the client, already filled with data comprising information about said key parameters, to said analytics, matched with one n^{th} profile selected from said series of profiles n₁, ..., nₙ.

5. The method according to claim 3 wherein said deep learning neural network will further train itself based on data collected in said analytics database storing said key parameters describing the behavior of users on said digital media, after implementation of the system.

6. A system for personalizing digital information to be displayed on a digital media comprising:
v) A digital information database managed by the publisher of said digital information, comprising a series of building blocks for said digital information, each building block in the series of building blocks matching to at least one profile in a series of predefined profiles n₁, ... nₙ, said digital information management system sending the appropriate building block corresponding to a predefined profile in a list of predefined profiles, upon receiving a signal comprising an identifier of said predefined profile
vi) An analytics database, comprising at least one processor and a computer readable medium, said analytics database storing values corresponding to key parameters defined in a series of key parameters p₁,p₂,...,p_{z} such as scrolling behavior, navigation behavior, CTR, CR, ...
vii) A machine learning engine, comprising at least one processor and a computer readable medium, said machine learning engine matching said key parameters stored in said analytics database with a nₜₕ profile in said predefined series of profiles n₁,n₂,... nₙ
viii) An analytics script implemented on said digital media publishing the digital information, said script collecting said values corresponding to said key parameters defined in said series of key parameters, said script sending a signal comprising said values corresponding to said key parameters defined in said series of key parameters to said analytics database, said script receiving a signal comprising a profile prediction made by said machine learning engine for the visitor currently consulting the digital medium, said profile prediction containing an identifier of said predicted profile in the list of predefined profiles n₁, ... nₙ, said analysis script storing said identifier of said matched profile in a cookie or data layer, written on the computer readable medium of said digital media publishing said digital information. Said cookie or said data layer can be read out by a digital information system of the publisher to obtain said matched profile in order to query a digital information database from the publisher for building blocks matching said predicted profile.

7. System according to claim 6, wherein said machine learning engine, connected to said analytics database, is programmed to use a decision tree model. Said decision tree model being provided to predict a probability rate for each nth profile in said series of profiles by analyzing said analytics database comprising key parameters for said visitor of said digital medium.

8. System according to claim 6, wherein said machine learning engine, connected to said analytics database, is a deep learning neural network, said deep learning neural network being provided to predict a probability rate for each nth profile in said series of profiles by analyzing said analytics database comprising key parameters for said visitor of said digital medium .
